# EUROPEAN PATENT APPLICATION

(11) **EP 4 723 773 A1**
(43) Date of publication of application: **08.04.2026**
(21) Application number: 24844327.7
(22) Date of filing: 10.05.2024
(51) Int. Cl.: H04W 72/044

(54) **COMMUNICATION METHOD, COMMUNICATION APPARATUS, AND COMMUNICATION SYSTEM**

(30) Priority: 21.07.2023 CN 202310909340
(71) Applicant: Huawei Technologies Co., Ltd., Shenzhen, Guangdong 518129 (CN)
(72) Inventor: PU, Tao, Shenzhen, Guangdong 518129 (CN); GENG, Yang, Shenzhen, Guangdong 518129 (CN); SHEN, Yuxiang, Shenzhen, Guangdong 518129 (CN); LI, Lingpeng, Shenzhen, Guangdong 518129 (CN)
(74) Representative: MERH-IP Matias Erny Reichl Hoffmann Patentanwälte PartG mbB
(86) International application number: PCT/CN2024/092354
(87) International publication number: WO 2025/020631

(57) **Abstract**

This application provides a communication method, a communication apparatus, and a communication system. The method includes: determining, based on QoS requirements of different types of terminal devices, an operating mode corresponding to a first time unit, and forming a directional beam in the first time unit based on the operating mode, where the operating mode is a mode in which a first-type terminal device exclusively occupies a time unit, a mode in which a second-type terminal device exclusively occupies a time unit, or a mode in which a first-type terminal device and a second-type terminal device share a time unit, so that high-quality services can be provided for the different types of terminal devices based on the QoS requirements.

## Description

### CROSS-REFERENCE TO RELATED APPLICATIONS

This application claims priority to Chinese Patent Application No. 202310909340.5, filed with the China National Intellectual Property Administration on July 21, 2023 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of wireless communication technologies, and in particular, to a communication method, a communication apparatus, and a communication system.

### BACKGROUND

To provide better quality of service for terminal devices, network devices typically need to transmit directional beams to the terminal devices, in other words, directions of main beams are aligned with the terminal devices.

With development of communication technologies, there are more types of terminal devices. How to provide high-quality services for different types of terminal devices needs to be resolved.

### SUMMARY

This application provides a communication method, a communication apparatus, and a communication system, to provide high-quality services for different types of terminal devices.

According to a first aspect, an embodiment of this application provides a communication method. The method may be performed by a network device or an apparatus, for example, a chip, used in the network device. The method includes: determining, based on a first quality of service (quality of service, QoS) requirement of a first-type terminal device and a second QoS requirement of a second-type terminal device, an operating mode corresponding to a first time unit, where the first QoS requirement indicates a QoS requirement of the first-type terminal device in the first time unit, the second QoS requirement indicates a QoS requirement of the second-type terminal device in the first time unit, and the operating mode is a mode in which the first-type terminal device exclusively occupies a time unit, a mode in which the second-type terminal device exclusively occupies a time unit, or a mode in which the first-type terminal device and the second-type terminal device share a time unit; and forming a directional beam in the first time unit based on the operating mode.

In the foregoing solution, the operating mode corresponding to the first time unit is determined based on QoS requirements of different types of terminal devices, and the directional beam in the first time unit is formed based on the operating mode. The operating mode is the mode in which the first-type terminal device exclusively occupies the time unit, the mode in which the second-type terminal device exclusively occupies the time unit, or the mode in which the first-type terminal device and the second-type terminal device share the time unit, so that high-quality services can be provided for the different types of terminal devices based on the QoS requirements.

In a possible implementation, the determining, based on the first QoS requirement of the first-type terminal device and the second QoS requirement of the second-type terminal device, the operating mode corresponding to the first time unit includes: determining, based on the first QoS requirement and the second QoS requirement, that the operating mode corresponding to the first time unit is the mode in which the first-type terminal device exclusively occupies the time unit, where the QoS requirement of the first-type terminal device in the first time unit indicates that the first-type terminal device has a scheduling requirement in the first time unit, and the QoS requirement of the second-type terminal device in the first time unit indicates that the second-type terminal device has no scheduling requirement in the first time unit.

In the foregoing solution, the scheduling requirement of the first-type terminal device is satisfied, and communication quality of service of the first-type terminal device can be improved. In addition, because the second-type terminal device has no scheduling requirement, communication quality of service of the second-type terminal device is not affected.

In a possible implementation, the forming the directional beam in the first time unit based on the operating mode includes: forming, based on an all-antenna array, a directional beam used for the first-type terminal device in the first time unit.

In a possible implementation, the determining, based on the first QoS requirement of the first-type terminal device and the second QoS requirement of the second-type terminal device, the operating mode corresponding to the first time unit includes: determining, based on the first QoS requirement and the second QoS requirement, that the operating mode corresponding to the first time unit is the mode in which the second-type terminal device exclusively occupies the time unit, where the QoS requirement of the first-type terminal device in the first time unit indicates that the first-type terminal device has no scheduling requirement in the first time unit, and the QoS requirement of the second-type terminal device in the first time unit indicates that the second-type terminal device has a scheduling requirement in the first time unit.

In the foregoing solution, the scheduling requirement of the second-type terminal device is satisfied, and communication quality of service of the second-type terminal device can be improved. In addition, because the first-type terminal device has no scheduling requirement, communication quality of service of the first-type terminal device is not affected.

In a possible implementation, the forming the directional beam in the first time unit based on the operating mode includes: forming, based on an all-antenna array, a directional beam used for the second-type terminal device in the first time unit.

In a possible implementation, the determining, based on the first QoS requirement of the first-type terminal device and the second QoS requirement of the second-type terminal device, the operating mode corresponding to the first time unit includes: determining, based on the first QoS requirement and the second QoS requirement, that the operating mode corresponding to the first time unit is the mode in which the first-type terminal device and the second-type terminal device share the time unit, where the QoS requirement of the first-type terminal device in the first time unit indicates that the first-type terminal device has a scheduling requirement in the first time unit, and the QoS requirement of the second-type terminal device in the first time unit indicates that the second-type terminal device has a scheduling requirement in the first time unit.

In the foregoing solution, both the scheduling requirement of the first-type terminal device and the scheduling requirement of the second-type terminal device are satisfied. Therefore, communication quality of service of the first-type terminal device and the second-type terminal device can be improved.

In a possible implementation, the forming the directional beam in the first time unit based on the operating mode includes: determining a first antenna array and a second antenna array based on the operating mode, the first QoS requirement, the second QoS requirement, first channel state information of the first-type terminal device, and second channel state information of the second-type terminal device; forming, based on the first antenna array, a first directional beam used for the first-type terminal device in the first time unit; and forming, based on the second antenna array, a second directional beam used for the second-type terminal device in the first time unit.

In a possible implementation, the forming, based on the first antenna array, the first directional beam used for the first-type terminal device in the first time unit includes: forming the first directional beam based on a weight value of the first antenna array; and the forming, based on the second antenna array, the second directional beam used for the second-type terminal device in the first time unit includes: forming the second directional beam based on a weight value of the second antenna array.

In a possible implementation, the first-type terminal device is a ground terminal device, the ground terminal device includes a first terminal device and a second terminal device, channel quality of the first terminal device is higher than channel quality of the second terminal device, and the first directional beam is used for the first terminal device but not used for the second terminal device.

In the foregoing solution, in a mode in which a ground terminal device and an air terminal device share a time unit, impact on communication performance and quality of the ground terminal device can be minimized.

In a possible implementation, the first-type terminal device is a ground terminal device, the ground terminal device includes a first terminal device and a second terminal device, channel quality of the first terminal device is higher than or equal to a first threshold, channel quality of the second terminal device is lower than the first threshold, and the first directional beam is used for the first terminal device but is not used for the second terminal device.

In the foregoing solution, in a mode in which a ground terminal device and an air terminal device share a time unit, impact on communication performance and quality of the ground terminal device can be minimized.

In a possible implementation, the first-type terminal device is a ground terminal device, and the second-type terminal device is an air terminal device; or the first-type terminal device is an air terminal device, and the second-type terminal device is a ground terminal device.

In a possible implementation, the first time unit is a slot, a mini-slot, or a symbol.

According to a second aspect, an embodiment of this application provides a communication apparatus. The apparatus may be a network device or a module (for example, a chip) used in the network device. The apparatus has a function of implementing any one of the implementations of the first aspect. The function may be implemented by hardware, or may be implemented by hardware executing corresponding software. The hardware or the software includes one or more modules corresponding to the function.

According to a third aspect, an embodiment of this application provides a communication apparatus, including a processor. The processor is configured to perform any one of the implementations of the first aspect. Optionally, the communication apparatus further includes a memory. The memory is configured to store computer instructions. When the communication apparatus runs, the processor executes the computer instructions in the memory, to implement any one of the implementations of the first aspect.

According to a fourth aspect, an embodiment of this application provides a communication apparatus, including a unit or a means (means) configured to perform steps of any one of the implementations of the first aspect.

According to a fifth aspect, an embodiment of this application provides a communication apparatus, including a processor and an interface circuit. The processor is configured to communicate with another apparatus through the interface circuit, and perform any one of the implementations of the first aspect. There are one or more processors.

According to a sixth aspect, an embodiment of this application provides a communication apparatus, including a processor coupled to a memory. The processor is configured to invoke a program stored in the memory, to perform any one of the implementations of the first aspect. The memory may be located inside or outside the apparatus. In addition, there may be one or more processors.

According to a seventh aspect, an embodiment of this application further provides a computer-readable storage medium. The computer-readable storage medium stores instructions, and when the instructions are run on a communication apparatus, any one of the implementations of the first aspect is performed.

According to an eighth aspect, an embodiment of this application further provides a computer program product. The computer program product includes a computer program or instructions. When the computer program or the instructions are run by a communication apparatus, any one of the implementations of the first aspect is performed.

According to a ninth aspect, an embodiment of this application further provides a chip system, including: a processor, configured to perform any one of the implementations of the first aspect.

According to a tenth aspect, an embodiment of this application further provides a communication system, including a first-type terminal device, a second-type terminal device, and a network device configured to perform any one of the implementations of the first aspect. The first-type terminal device is configured to send a first QoS requirement, where the first QoS requirement indicates a QoS requirement of the first-type terminal device in a first time unit. The second-type terminal device is configured to send a second QoS requirement, where the second QoS requirement indicates a QoS requirement of the second-type terminal device in the first time unit.

According to an eleventh aspect, an embodiment of this application further provides a communication method, including: A first-type terminal device sends a first QoS requirement, where the first QoS requirement indicates a QoS requirement of the first-type terminal device in a first time unit; and a second-type terminal device sends a second QoS requirement, where the second QoS requirement indicates a QoS requirement of the second-type terminal device in the first time unit. A network device determines, based on the first QoS requirement and the second QoS requirement, an operating mode corresponding to the first time unit, where the operating mode is a mode in which the first-type terminal device exclusively occupies a time unit, a mode in which the second-type terminal device exclusively occupies a time unit, or a mode in which the first-type terminal device and the second-type terminal device share a time unit. The network device forms a directional beam in the first time unit based on the operating mode.

### BRIEF DESCRIPTION OF DRAWINGS

FIG. 1(a) is a diagram of an architecture of a communication system to which an embodiment of this application is applied;
FIG. 1(b) is a diagram of a network device;
FIG. 1(c) is a diagram of a communication system according to an embodiment of this application;
FIG. 2 is a schematic flowchart of a communication method according to an embodiment of this application;
FIG. 3 is a diagram of an example of a mode in which a first-type terminal device exclusively occupies a time unit;
FIG. 4 is a diagram of an example of a mode in which a second-type terminal device exclusively occupies a time unit;
FIG. 5 is a diagram of an example of a mode in which a first-type terminal device and a second-type terminal device share a time unit;
FIG. 6 is a diagram of a structure of a communication apparatus according to an embodiment of this application; and
FIG. 7 is a diagram of a structure of a communication apparatus according to an embodiment of this application.

### DESCRIPTION OF EMBODIMENTS

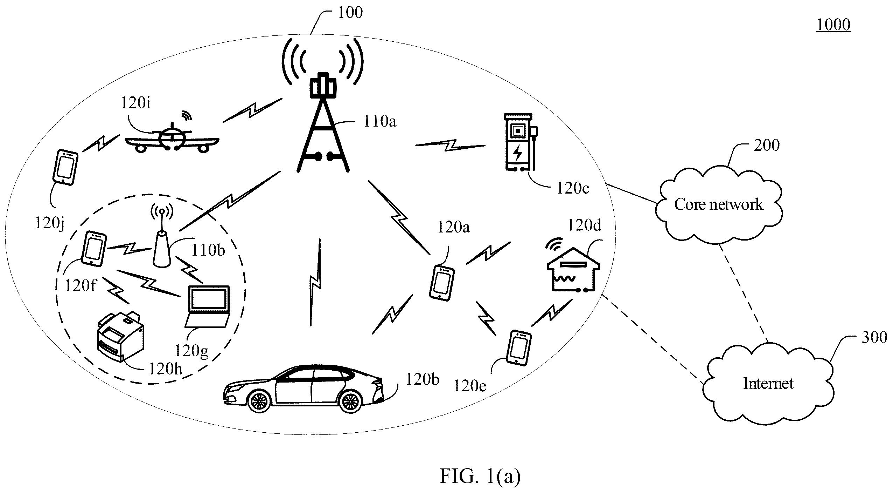

FIG. 1(a) is a diagram of an architecture of a communication system to which an embodiment of this application is applied. The communication system 1000 shown in FIG. 1(a) includes an access network 100 and a core network 200. For example, the communication system 1000 further includes an internet 300. The access network 100 may include at least one network device (for example, 110a and 110b in FIG. 1(a)), and may further include at least one terminal device (for example, 120a to 120j in FIG. 1(a)). The terminal device is connected to the network device in a wireless manner, and the network device is connected to the core network in a wireless or wired manner. A core network device and the network device may be different physical devices that are independent of each other, functions of the core network device and logical functions of the network device may be integrated into a same physical device, or some functions of the core network device and some functions of the network device may be integrated into one physical device. Terminal devices may be connected to each other and network devices may be connected to each other in a wired or wireless manner. FIG. 1(a) is only a diagram. The communication system may further include other network devices, for example, a wireless relay device and a wireless backhaul device, which are not shown in FIG. 1(a).

The network device is an access device for the terminal device to access the communication system in a wired or wireless manner. The network device may be a base station (base station), for example, including an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a wireless fidelity (wireless fidelity, Wi-Fi) system, or the like. The network device may alternatively be a module or a unit that completes some functions of a base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. For detailed descriptions of the foregoing protocol layers, refer to related technical specifications in 3GPP. The network device may be a macro base station (for example, 110a in FIG. 1(a)), may be a micro base station or an indoor base station (for example, 110b in FIG. 1(a)), or may be a relay node, a donor node, or the like. A specific technology and a specific device form that are used by the network device are not limited in embodiments of this application.

The terminal device is a device that has a wireless transceiver function, and may send a signal to the network device, or receive a signal from the network device. The terminal device includes but is not limited to a terminal apparatus, a terminal, user equipment (user equipment, UE), a mobile station, a mobile terminal, and the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, self-driving, telemedicine, a smart grid, smart furniture, a smart office, a smart wearable, smart transportation, and a smart city. The terminal device may be specifically a mobile phone, a tablet computer, a computer having a wireless transceiver function, a wearable device, a vehicle, an airplane, a ship, a robot, a robot arm, a smart home device, or the like. A specific technology and a specific device form that are used by the terminal device are not limited in embodiments of this application.

The network device and the terminal device may be at fixed positions, or may be movable. The network device and the terminal device may be deployed on land, including indoor devices, outdoor devices, handheld devices, or vehicle-mounted devices; may be deployed on water; or may be deployed on an airplane, a balloon, and a man-made satellite. Application scenarios of the network device and the terminal device are not limited in embodiments of this application.

Roles of the network device and the terminal device may be relative. For example, a helicopter or an uncrewed aerial vehicle 120i in FIG. 1(a) may be configured as a mobile network device. For the terminal device 120j that accesses the access network 100 via 120i, the terminal device 120i is a network device. However, for 110a, 120i is a terminal device, in other words, 110a and 120i communicate with each other by using a radio air interface protocol. Certainly, 110a and 120i may alternatively communicate with each other by using an interface protocol between network devices. In this case, compared with 110a, 120i is also a network device. Therefore, both the network device and the terminal device may be collectively referred to as communication apparatuses. 110a and 110b in FIG. 1(a) may be referred to as communication apparatuses having a function of the network device, and 120a to 120j in FIG. 1(a) may be referred to as communication apparatuses having a function of the terminal device.

Communication may be performed between the network device and the terminal device, between network devices, or between terminal devices by using a licensed spectrum, an unlicensed spectrum, or both a licensed spectrum and an unlicensed spectrum; may be performed by using a spectrum below 6 gigahertz (gigahertz, GHz); may be performed by using a spectrum above 6 GHz; or may be performed by using both a spectrum below 6 GHz and a spectrum above 6 GHz. A spectrum resource used for wireless communication is not limited in embodiments of this application.

In this embodiment of this application, a function of the network device may alternatively be performed by a module (for example, a chip) in the network device, or may be performed by a control subsystem including the function of the network device. The control subsystem including the function of the network device herein may be a control center in the foregoing application scenarios such as a smart grid, industrial control, intelligent transportation, and a smart city. A function of the terminal device may alternatively be performed by a module (for example, a chip or a modem) in the terminal device, or may be performed by an apparatus including the function of the terminal device.

In this application, the network device sends a downlink signal or downlink information to the terminal device, and the downlink information is carried on a downlink channel. The terminal device sends an uplink signal or uplink information to the network device, and the uplink information is carried on an uplink channel. To communicate with the network device, the terminal device needs to establish a wireless connection with a cell controlled by the network device. The cell that establishes the wireless connection with the terminal device is referred to as a serving cell of the terminal device.

The core network 200 may include one or more core network devices. The core network device includes but is not limited to one or more of the following network elements: an authentication server function (authentication server function, AUSF) network element, a unified data management (unified data management, UDM) network element, a unified data repository (unified data repository, UDR) network element, a network repository function (network repository function, NRF) network element, a network exposure function (network exposure function, NEF) network element, an application function (application function, AF) network element, a policy control function (policy control function, PCF) network element, an access and mobility management function (access and mobility management function, AMF) network element, a session management function (session management function, SMF) network element, a user plane function (user plane function, UPF) network element, a binding support function (binding support function, BSF) network element, and a network data analytics function (network data analytics function, NWDAF) network element.

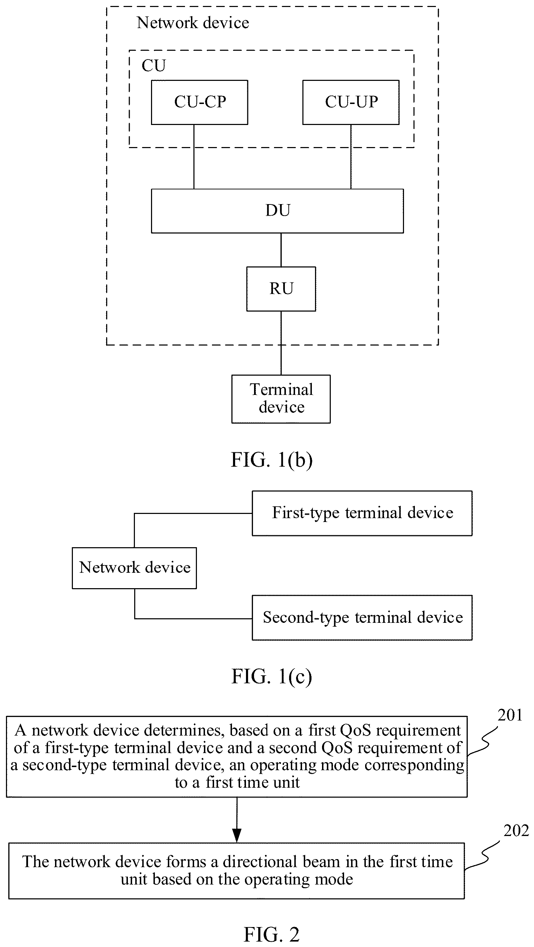

FIG. 1(b) is a diagram of a network device. As shown in FIG. 1(b), the network device includes one or more CUs, one or more DUs, and one or more radio units (radio units, RUs). For clarity, FIG. 1(b) shows only one CU, one DU, and one RU. The CU is configured to connect to a core network and the one or more DUs. For example, the CU may have some functions of the core network. The CU may include a CU control plane (control plane, CP) and a CU user plane (user plane, UP).

The CU and the DU may be configured based on functions, implemented by the CU and the DU, of protocol layers of a wireless network. For example, the CU is configured to implement functions of a packet data convergence protocol (packet data convergence protocol, PDCP) layer and a protocol layer above the PDCP layer (for example, a radio resource control (radio resource control, RRC) layer and/or a service data adaptation protocol (service data adaptation protocol, SDAP) layer). The DU is configured to implement a function of a protocol layer below the PDCP layer (for example, a radio link control (radio link control, RLC) layer, a medium access control (medium access control, MAC) layer, and/or a physical (physical, PHY) layer). For another example, the CU is configured to implement a function of a protocol layer above a PDCP layer (for example, an RRC layer and/or an SDAP layer), and the DU is configured to implement functions of the PDCP layer and a protocol layer below the PDCP layer (for example, an RLC layer, a MAC layer, and/or a PHY layer).

The foregoing configuration of the CU and the DU is merely an example. Alternatively, functions of the CU and the DU may be configured as needed. For example, the CU or the DU may be configured to have functions of more protocol layers, or the CU or the DU may be configured to have some processing functions of protocol layers. For example, some functions of the RLC layer and a function of a protocol layer above the RLC layer are set on the CU, and remaining functions of the RLC layer and a function of a protocol layer below the RLC layer are set on the DU. For another example, division into functions of the CU or the DU may be performed based on service types or other system requirements. For example, division may be performed based on a delay. Functions whose processing time needs to satisfy a requirement of a small delay are set on the DU, and functions whose processing time does not need to satisfy the requirement of the delay are set on the CU.

The DU and the RU may work together to implement a function of the PHY layer. One DU may be connected to one or more RUs. Functions of the DU and the RU may be configured in a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer or implement the lower-layer function and a radio frequency function. The higher-layer function of the physical layer may include some functions of the physical layer, and the some functions are closer to the MAC layer. The lower-layer function of the physical layer may include some other functions of the physical layer, and the some other functions are closer to an intermediate radio frequency side.

In different systems, the CU (or the CU-CP and the CU-UP), the DU, or the RU may also have different names, but a person skilled in the art may understand meanings thereof. For example, in an open RAN (open RAN, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

FIG. 1(c) is a diagram of a communication system according to an embodiment of this application. The communication system includes a network device, a first-type terminal device, and a second-type terminal device. The first-type terminal device includes one or more terminal devices, and the second-type terminal device includes one or more terminal devices. In an implementation, the first-type terminal device is an air terminal device, for example, a low-altitude uncrewed aerial vehicle, and the second-type terminal device is a ground terminal device, for example, a mobile phone or a computer. In another implementation, the first-type terminal device is a ground terminal device, and the second-type terminal device is an air terminal device.

FIG. 2 is a schematic flowchart of a communication method according to an embodiment of this application. The method is performed by a network device or a module (for example, a chip) used in the network device. An example in which the network device performs the method is used. The method includes the following steps.

Step 201: The network device determines, based on a first QoS requirement of a first-type terminal device and a second QoS requirement of a second-type terminal device, an operating mode corresponding to a first time unit.

The first QoS requirement indicates a QoS requirement of the first-type terminal device in the first time unit. For example, the first QoS requirement includes at least one of a traffic requirement, a delay requirement, or a packet loss rate requirement of the first-type terminal device. The first time unit includes at least one slot (slot), at least one mini-slot (mini-slot), or at least one symbol (symbol).

The second QoS requirement indicates a QoS requirement of the second-type terminal device in the first time unit. For example, the second QoS requirement includes at least one of a traffic requirement, a delay requirement, or a packet loss rate requirement of the second-type terminal device.

The operating mode is a mode in which the first-type terminal device exclusively occupies a time unit, a mode in which the second-type terminal device exclusively occupies a time unit, or a mode in which the first-type terminal device and the second-type terminal device share a time unit.

In an implementation, when the QoS requirement of the first-type terminal device in the first time unit indicates that the first-type terminal device has a scheduling requirement in the first time unit, and the QoS requirement of the second-type terminal device in the first time unit indicates that the second-type terminal device has no scheduling requirement in the first time unit, the network device determines, based on the first QoS requirement and the second QoS requirement, that the operating mode corresponding to the first time unit is the mode in which the first-type terminal device exclusively occupies the time unit.

In another implementation, when the QoS requirement of the first-type terminal device in the first time unit indicates that the first-type terminal device has no scheduling requirement in the first time unit, and the QoS requirement of the second-type terminal device in the first time unit indicates that the second-type terminal device has a scheduling requirement in the first time unit, the network device determines, based on the first QoS requirement and the second QoS requirement, that the operating mode corresponding to the first time unit is the mode in which the second-type terminal device exclusively occupies the time unit.

In another implementation, when the QoS requirement of the first-type terminal device in the first time unit indicates that the first-type terminal device has a scheduling requirement in the first time unit, and the QoS requirement of the second-type terminal device in the first time unit indicates that the second-type terminal device has a scheduling requirement in the first time unit, the network device determines, based on the first QoS requirement and the second QoS requirement, that the operating mode corresponding to the first time unit is the mode in which the first-type terminal device and the second-type terminal device share the time unit.

Step 202: The network device forms a directional beam in the first time unit based on the operating mode.

The following provides descriptions in different cases.

Case 1: When the operating mode corresponding to the first time unit is the mode in which the first-type terminal device exclusively occupies the time unit, the network device forms, based on an all-antenna array, a directional beam used for the first-type terminal device in the first time unit.

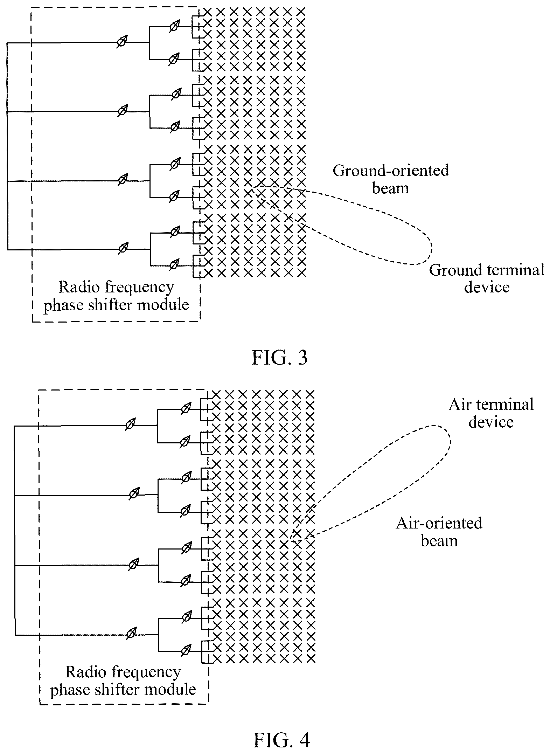

FIG. 3 is a diagram of an example of the mode in which the first-type terminal device exclusively occupies the time unit. An example in which the first-type terminal device is a ground terminal device, and the second-type terminal device is an air terminal device is used. In the mode in which the first-type terminal device exclusively occupies the time unit, the network device forms, based on the all-antenna array, the directional beam used for the first-type terminal device in the first time unit. The directional beam is also referred to as a ground-oriented beam, and a main beam direction of the directional beam is aligned with the ground terminal device. In the manner, a scheduling requirement of the ground terminal device is satisfied, and communication quality of service of the ground terminal device can be improved. In addition, because the air terminal device has no scheduling requirement, communication quality of service of the air terminal device is not affected.

Case 2: When the operating mode corresponding to the first time unit is the mode in which the second-type terminal device exclusively occupies the time unit, the network device forms, based on an all-antenna array, a directional beam used for the second-type terminal device in the first time unit.

FIG. 4 is a diagram of an example of the mode in which the second-type terminal device exclusively occupies the time unit. An example in which the first-type terminal device is a ground terminal device, and the second-type terminal device is an air terminal device is used. In the mode in which the second-type terminal device exclusively occupies the time unit, the network device forms, based on the all-antenna array, the directional beam used for the second-type terminal device in the first time unit. The directional beam is also referred to as an air-oriented beam, and a main beam direction of the directional beam is aligned with the air terminal device. In the manner, a scheduling requirement of the air terminal device is satisfied, and communication quality of service of the air terminal device can be improved. In addition, because the ground terminal device has no scheduling requirement, communication quality of service of the ground terminal device is not affected.

Case 3: When the operating mode corresponding to the first time unit is the mode in which the first-type terminal device and the second-type terminal device share the time unit, the network device determines a first antenna array and a second antenna array based on the operating mode, the first QoS requirement, the second QoS requirement, first channel state information (channel state information, CSI) of the first-type terminal device, and second channel state information of the second-type terminal device; forms, based on the first antenna array, a first directional beam used for the first-type terminal device in the first time unit, specifically, forms, based on a weight value of the first antenna array (which may be, for example, a weight value of a radio frequency phase shifter corresponding to the first antenna array), the first directional beam used for the first-type terminal device in the first time unit; and forms a second directional beam, based on the second antenna array, used for the second-type terminal device in the first time unit, specifically, forms, based on a weight value of the second antenna array (which may be, for example, a weight value of a radio frequency phase shifter corresponding to the second antenna array), the second directional beam used for the second-type terminal device in the first time unit.

The first antenna array and the second antenna array may be evenly divided (which is also referred to as symmetrical division), to be specific, the all-antenna array is evenly divided into the first antenna array and the second antenna array. Alternatively, the first antenna array and the second antenna array may be unevenly divided (which is also referred to as asymmetrical division). The first channel state information is reported by the first-type terminal device to the network device, and the first channel state information indicates channel quality between the first-type terminal device and the network device, for example, indicates signal strength of a channel. The second channel state information is reported by the second-type terminal device to the network device, and the second channel state information indicates channel quality between the second-type terminal device and the network device, for example, indicates signal strength of a channel.

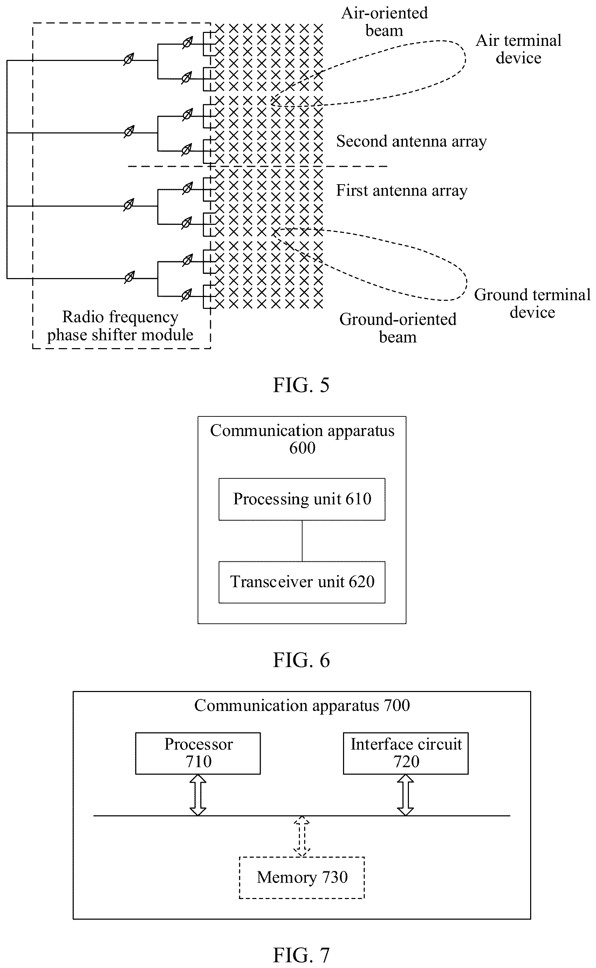

FIG. 5 is a diagram of an example of the mode in which the first-type terminal device and the second-type terminal device share the time unit. An example in which the first-type terminal device is a ground terminal device, and the second-type terminal device is an air terminal device is used. In the mode in which the first-type terminal device and the second-type terminal device share the time unit, the network device forms, based on the first antenna array, a first directional beam used for the first-type terminal device in the first time unit, where the first directional beam is also referred to as a ground-oriented beam, and a main beam direction of the first directional beam is aligned with the ground terminal device, and forms, based on the second antenna array, a second directional beam used for the second-type terminal device in the first time unit, where the second directional beam is also referred to as an air-oriented beam, and a main beam direction of the second directional beam is aligned with the air terminal device. In the manner, both a scheduling requirement of the air terminal device and a scheduling requirement of the ground terminal device are satisfied. Therefore, communication quality of service of the ground terminal device and the air terminal device can be improved.

In the mode in which the first-type terminal device and the second-type terminal device share the time unit, because two types of beams, that is, the air-oriented beam and the ground-oriented beam, are generated by using two subarrays (that is, the first antenna array and the second antenna array), compared with a ground directional beam generated by using the all-antenna array, some array gains and transmission power are lost. Consequently, a signal-to-noise ratio of the ground terminal device is reduced, and a ground terminal device (for example, a terminal device at a cell edge) with poor channel quality causes large communication performance losses. Therefore, in the mode in which the first-type terminal device and the second-type terminal device share the time unit, the network device may preferentially schedule a ground terminal device (for example, a terminal device at a near point in a cell) with good channel quality in the first time unit, and schedule a ground terminal device (for example, a terminal device at a far point in a cell) with poor channel quality in the model in which the ground terminal device exclusively occupies the time unit as much as possible. For example, in the mode in which the first-type terminal device and the second-type terminal device share the time unit, for example, the ground terminal device includes a first terminal device and a second terminal device. For example, if channel quality of the first terminal device is higher than channel quality of the second terminal device, the first directional beam determined by the network device is used for the first terminal device but not used for the second terminal device. For another example, if channel quality of the first terminal device is higher than or equal to a first threshold, and channel quality of the second terminal device is lower than the first threshold, the first directional beam determined by the network device is used for the first terminal device but not used for the second terminal device. In the manner, in the mode in which the first-type terminal device and the second-type terminal device share the time unit, impact on communication performance and quality of the ground terminal device can be minimized.

In an implementation, the network device configured to perform the method embodiment in FIG. 2 may include a control and scheduling module, a radio frequency phase shifter module, a QoS requirement obtaining module, and a channel state information obtaining module. The QoS requirement obtaining module is configured to obtain the first QoS requirement of the first-type terminal device and the second QoS requirement of the second-type terminal device. The channel state information obtaining module is configured to obtain the first channel state information of the first-type terminal device and the second channel state information of the second-type terminal device. The radio frequency phase shifter module is an entity component of a radio frequency module in the network device, and may provide a microwave with a controllable phase difference for a radio frequency signal, and generate a directional beam based on a weight value of the radio frequency phase shifter. The control and scheduling module is configured to generate a weight value of an antenna array or the weight value of the radio frequency phase shifter. The control and scheduling module may be configured to implement step 201 in the embodiment in FIG. 2. The control and scheduling module and the radio frequency phase shifter module may jointly implement step 202 in the embodiment in FIG. 2.

To implement functions in the foregoing embodiments, the network device includes a corresponding hardware structure and/or software module for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 6 and FIG. 7 are diagrams of structures of possible communication apparatuses according to embodiments of this application. The communication apparatuses may be configured to implement a function of the network device in the foregoing method embodiment. Therefore, beneficial effects of the foregoing method embodiments can also be achieved. In embodiments of this application, the communication apparatus may be a network device, or may be a module (for example, a chip) used in the network device.

As shown in FIG. 6, a communication apparatus 600 includes a processing unit 610 and a transceiver unit 620. The communication apparatus 600 may be configured to implement a function of the network device in the foregoing method embodiment.

When the communication apparatus 600 is configured to implement the function of the network device in the foregoing embodiment, the processing unit 610 is configured to determine, based on a first QoS requirement of a first-type terminal device and a second QoS requirement of a second-type terminal device, an operating mode corresponding to a first time unit, where the first QoS requirement indicates a QoS requirement of the first-type terminal device in the first time unit, the second QoS requirement indicates a QoS requirement of the second-type terminal device in the first time unit, and the operating mode is a mode in which the first-type terminal device exclusively occupies a time unit, a mode in which the second-type terminal device exclusively occupies a time unit, or a mode in which the first-type terminal device and the second-type terminal device share a time unit; and form a directional beam in the first time unit based on the operating mode.

In a possible implementation, the transceiver unit 620 is configured to receive the first QoS requirement and the second QoS requirement.

In a possible implementation, that the processing unit 610 is configured to determine, based on the first QoS requirement of the first-type terminal device and the second QoS requirement of the second-type terminal device, the operating mode corresponding to the first time unit specifically includes: determining, based on the first QoS requirement and the second QoS requirement, that the operating mode corresponding to the first time unit is the mode in which the first-type terminal device exclusively occupies the time unit, where the QoS requirement of the first-type terminal device in the first time unit indicates that the first-type terminal device has a scheduling requirement in the first time unit, and the QoS requirement of the second-type terminal device in the first time unit indicates that the second-type terminal device has no scheduling requirement in the first time unit.

In a possible implementation, that the processing unit 610 is configured to form the directional beam in the first time unit based on the operating mode specifically includes: forming, based on an all-antenna array, a directional beam used for the first-type terminal device in the first time unit.

In a possible implementation, that the processing unit 610 is configured to determine, based on the first QoS requirement of the first-type terminal device and the second QoS requirement of the second-type terminal device, the operating mode corresponding to the first time unit specifically includes: determining, based on the first QoS requirement and the second QoS requirement, that the operating mode corresponding to the first time unit is the mode in which the second-type terminal device exclusively occupies the time unit, where the QoS requirement of the first-type terminal device in the first time unit indicates that the first-type terminal device has no scheduling requirement in the first time unit, and the QoS requirement of the second-type terminal device in the first time unit indicates that the second-type terminal device has a scheduling requirement in the first time unit.

In a possible implementation, that the processing unit 610 is configured to form the directional beam in the first time unit based on the operating mode specifically includes: forming, based on an all-antenna array, a directional beam used for the second-type terminal device in the first time unit.

In a possible implementation, that the processing unit 610 is configured to determine, based on the first QoS requirement of the first-type terminal device and the second QoS requirement of the second-type terminal device, the operating mode corresponding to the first time unit specifically includes: determining, based on the first QoS requirement and the second QoS requirement, that the operating mode corresponding to the first time unit is the mode in which the first-type terminal device and the second-type terminal device share the time unit, where the QoS requirement of the first-type terminal device in the first time unit indicates that the first-type terminal device has a scheduling requirement in the first time unit, and the QoS requirement of the second-type terminal device in the first time unit indicates that the second-type terminal device has a scheduling requirement in the first time unit.

In a possible implementation, that the processing unit 610 is configured to form the directional beam in the first time unit based on the operating mode specifically includes: determining a first antenna array and a second antenna array based on the operating mode, the first QoS requirement, the second QoS requirement, first channel state information of the first-type terminal device, and second channel state information of the second-type terminal device; forming, based on the first antenna array, a first directional beam used for the first-type terminal device in the first time unit; and forming, based on the second antenna array, a second directional beam used for the second-type terminal device in the first time unit.

In a possible implementation, the transceiver unit 620 is configured to receive the first channel state information and the second channel state information.

In a possible implementation, that the processing unit 610 is configured to form, based on the first antenna array, the first directional beam used for the first-type terminal device in the first time unit specifically includes: forming the first directional beam based on a weight value of the first antenna array. That the processing unit 610 is configured to form, based on the second antenna array, the second directional beam used for the second-type terminal device in the first time unit specifically includes: forming the second directional beam based on a weight value of the second antenna array.

In a possible implementation, the first-type terminal device is a ground terminal device, the ground terminal device includes a first terminal device and a second terminal device, channel quality of the first terminal device is higher than channel quality of the second terminal device, and the first directional beam is used for the first terminal device but not used for the second terminal device.

In a possible implementation, the first-type terminal device is a ground terminal device, the ground terminal device includes a first terminal device and a second terminal device, channel quality of the first terminal device is higher than or equal to a first threshold, channel quality of the second terminal device is lower than the first threshold, and the first directional beam is used for the first terminal device but is not used for the second terminal device.

In a possible implementation, the first-type terminal device is a ground terminal device, and the second-type terminal device is an air terminal device; or the first-type terminal device is an air terminal device, and the second-type terminal device is a ground terminal device.

In a possible implementation, the first time unit is a slot, a mini-slot, or a symbol.

For more detailed descriptions about the processing unit 610 and the transceiver unit 620, directly refer to related descriptions in the foregoing method embodiment. Details are not described herein again.

A communication apparatus 700 shown in FIG. 7 includes a processor 710 and an interface circuit 720. The processor 710 and the interface circuit 720 are coupled to each other. It may be understood that the interface circuit 720 may be a transceiver or an input/output interface. For example, the communication apparatus 700 may further include a memory 730, configured to store instructions to be executed by the processor 710, store input data needed by the processor 710 to run the instructions, or store data generated after the processor 710 runs the instructions.

When the communication apparatus 700 is configured to implement the foregoing method embodiment, the processor 710 is configured to implement a function of the processing unit 610, and the interface circuit 720 is configured to implement a function of the transceiver unit 620.

When the communication apparatus is a module used in a network device, the module in the network device implements the function of the network device in the foregoing method embodiment. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, and a compact disk read-only memory (compact disc read-only memory, CD-ROM) or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. A computer program (Computer Program) is a set of instructions that instruct each step of an electronic computer or another device having a message processing capability, is usually written in a programming language, and is run on a target architecture. When the computer programs or the instructions are loaded and executed on a computer, procedures or functions in embodiments of this application are all or partially executed. The computer may be a general-purpose computer, a dedicated computer, a computer network, a network device, a terminal device, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

The protocol in this application may be a communication protocol or a specification, for example, a 3GPP communication protocol.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that, in embodiments of this application, the terminal device, the network device, or a second network device may perform some or all of steps in embodiments of this application. These steps or operations are merely examples. In embodiments of this application, other operations or variations of various operations may be further performed. In addition, the steps may be performed in a sequence different from that presented in embodiments of this application, and not all the operations in embodiments of this application may be necessarily performed.

In this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. In the text descriptions of this application, the character "/" represents an "or" relationship between the associated objects. In a formula in this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
determining, based on a first quality of service QoS requirement of a first-type terminal device and a second QoS requirement of a second-type terminal device, an operating mode corresponding to a first time unit, wherein the first QoS requirement indicates a QoS requirement of the first-type terminal device in the first time unit, the second QoS requirement indicates a QoS requirement of the second-type terminal device in the first time unit, and the operating mode is a mode in which the first-type terminal device exclusively occupies a time unit, a mode in which the second-type terminal device exclusively occupies a time unit, or a mode in which the first-type terminal device and the second-type terminal device share a time unit; and
forming a directional beam in the first time unit based on the operating mode.

2. The method according to claim 1, wherein the determining, based on the first QoS requirement of the first-type terminal device and the second QoS requirement of the second-type terminal device, the operating mode corresponding to the first time unit comprises:
determining, based on the first QoS requirement and the second QoS requirement, that the operating mode corresponding to the first time unit is the mode in which the first-type terminal device exclusively occupies the time unit, wherein the QoS requirement of the first-type terminal device in the first time unit indicates that the first-type terminal device has a scheduling requirement in the first time unit, and the QoS requirement of the second-type terminal device in the first time unit indicates that the second-type terminal device has no scheduling requirement in the first time unit.

3. The method according to claim 2, wherein the forming the directional beam in the first time unit based on the operating mode comprises:
forming, based on an all-antenna array, a directional beam used for the first-type terminal device in the first time unit.

4. The method according to claim 1, wherein the determining, based on the first QoS requirement of the first-type terminal device and the second QoS requirement of the second-type terminal device, the operating mode corresponding to the first time unit comprises:
determining, based on the first QoS requirement and the second QoS requirement, that the operating mode corresponding to the first time unit is the mode in which the second-type terminal device exclusively occupies the time unit, wherein the QoS requirement of the first-type terminal device in the first time unit indicates that the first-type terminal device has no scheduling requirement in the first time unit, and the QoS requirement of the second-type terminal device in the first time unit indicates that the second-type terminal device has a scheduling requirement in the first time unit.

5. The method according to claim 4, wherein the forming the directional beam in the first time unit based on the operating mode comprises:
forming, based on an all-antenna array, a directional beam used for the second-type terminal device in the first time unit.

6. The method according to claim 1, wherein the determining, based on the first QoS requirement of the first-type terminal device and the second QoS requirement of the second-type terminal device, the operating mode corresponding to the first time unit comprises:
determining, based on the first QoS requirement and the second QoS requirement, that the operating mode corresponding to the first time unit is the mode in which the first-type terminal device and the second-type terminal device share the time unit, wherein the QoS requirement of the first-type terminal device in the first time unit indicates that the first-type terminal device has a scheduling requirement in the first time unit, and the QoS requirement of the second-type terminal device in the first time unit indicates that the second-type terminal device has a scheduling requirement in the first time unit.

7. The method according to claim 6, wherein the forming the directional beam in the first time unit based on the operating mode comprises:
determining a first antenna array and a second antenna array based on the operating mode, the first QoS requirement, the second QoS requirement, first channel state information of the first-type terminal device, and second channel state information of the second-type terminal device;
forming, based on the first antenna array, a first directional beam used for the first-type terminal device in the first time unit; and
forming, based on the second antenna array, a second directional beam used for the second-type terminal device in the first time unit.

8. The method according to claim 7, wherein the forming, based on the first antenna array, the first directional beam used for the first-type terminal device in the first time unit comprises:
forming the first directional beam based on a weight value of the first antenna array; and
the forming, based on the second antenna array, the second directional beam used for the second-type terminal device in the first time unit comprises:
forming the second directional beam based on a weight value of the second antenna array.

9. The method according to claim 7 or 8, wherein the first-type terminal device is a ground terminal device, the ground terminal device comprises a first terminal device and a second terminal device, channel quality of the first terminal device is higher than channel quality of the second terminal device, and the first directional beam is used for the first terminal device but not used for the second terminal device.

10. The method according to claim 7 or 8, wherein the first-type terminal device is a ground terminal device, the ground terminal device comprises a first terminal device and a second terminal device, channel quality of the first terminal device is higher than or equal to a first threshold, channel quality of the second terminal device is lower than the first threshold, and the first directional beam is used for the first terminal device but is not used for the second terminal device.

11. The method according to any one of claims 1 to 8, wherein the first-type terminal device is a ground terminal device, and the second-type terminal device is an air terminal device; or
the first-type terminal device is an air terminal device, and the second-type terminal device is a ground terminal device.

12. The method according to any one of claims 1 to 11, wherein the first time unit is a slot, a mini-slot, or a symbol.

13. A communication apparatus, comprising a module configured to perform the method according to any one of claims 1 to 12.

14. A communication apparatus, comprising a processor coupled to a memory, wherein the processor is configured to invoke a program stored in the memory, to perform the method according to any one of claims 1 to 12.

15. A computer program product, wherein the computer program product comprises a computer program or instructions, and when the computer program or the instructions are run on a processor, the processor is caused to perform the method according to any one of claims 1 to 12.

16. A computer-readable storage medium, wherein the storage medium stores a computer program or instructions, and when the computer program or the instructions are executed by a communication apparatus, the method according to any one of claims 1 to 12 is implemented.

17. A communication system, comprising a first-type terminal device, a second-type terminal device, and a network device configured to perform the method according to any one of claims 1 to 12, wherein
the first-type terminal device is configured to send a first QoS requirement, wherein the first QoS requirement indicates a QoS requirement of the first-type terminal device in a first time unit; and
the second-type terminal device is configured to send a second QoS requirement, wherein the second QoS requirement indicates a QoS requirement of the second-type terminal device in the first time unit.
